# EUROPEAN PATENT SPECIFICATION

(11) **EP 3 738 844 B1**
(45) Date of publication and mention of the grant of the patent: **18.01.2023**
(21) Application number: 20173418.3
(22) Date of filing: 07.05.2020
(51) Int. Cl.: B60T 7/12

(54) **DRIVE UNIT**
ANTRIEBSEINHEIT
UNITÉ D'ENTRAÎNEMENT

(30) Priority: 14.05.2019 JP 2019091193
(43) Date of publication of application: 18.11.2020
(73) Proprietor: Exedy Corporation, Neyagawa-shi, Osaka 572-8570 (JP)
(72) Inventor: MATSUOKA, Yoshihiro, Neyagawa-shi, Osaka 572-8570 (JP)
(74) Representative: KASTEL Patentanwälte PartG mbB

(56) References cited:
- EP-A1- 1 547 891
- EP-A2- 2 757 005
- WO-A1-2015/068024
- DE-A1- 10 065 589
- DE-A1- 10 104 498

## Description

### BACKGROUND OF THE INVENTION

### 1. Field of the Invention

The present invention relates to a drive unit.

### 2. Description of the Related Art

EP 2 757 005 A2 discloses a method for holding a vehicle on a slope. The vehicle has a drive unit with an internal combustion engine, a clutch connected to the engine, a gear assembly connected to the clutch and driving at least one wheel, a control unit and an electric motor connected and connectable to an input of the gear unit. DE 100 65 589 A1 discloses a drive unit for a car with an internal combustion unit and a hill-holder system controlling the operation of a clutch of the drive unit. EP 1 547 891 A1 discloses an electric car having six wheels each driven by a separate electric motor and a braking device. A computer controls the resistance of the electric motors in dependence from the position of a braking pedal. WO 2015/0568024 A1 discloses a control apparatus for a vehicle having an idle stop function. The vehicle has an internal combustion engine and a torque converter. DE 101 04 498 A1 discloses a method for activating a start-up function for a vehicle starting on a slope. The function is activated by an enlarged braking force on a braking pedal.

In recent years, there have been developed a variety of electric cars traveling with use of a motor as a drive source. In the electric cars, drive wheels are driven by the motor. Such electric cars as herein described execute a control of reducing the vehicle velocity thereof with use of friction braking and regenerative braking when a braking operation is performed (e.g., Japan Laid-open Patent Application Publication No. 2017-139839). As a drawback of the electric cars described above, it is concerned that such a vehicle inevitably moves backward in starting movement on a slope if the braking operation is released by depressing a brake pedal.

### SUMMARY OF THE INVENTION

It is an object of the present invention to prevent a vehicle driven by an electric motor from moving backward in starting movement on a slope. This object is achieved by a drive unit having the features of enclosed claim 1. Advantageous embodiments of the invention form the subject-matter of the dependent claims.

A drive unit according to an aspect of the present invention includes an electric motor, a torque converter, a brake sensor and a controller. The torque converter is a device to which a torque outputted from the motor is inputted. The brake sensor detects a braking operation amount. The controller executes a first control of controlling the torque outputted from the motor based on the braking operation amount.

According to the configuration, the drive unit includes the torque converter to which the torque, outputted from the motor, is inputted. Hence, even during stop of a vehicle, the motor can be kept rotated. Because of this, when the controller controls the output of the motor based on the braking operation amount, the motor can be kept rotated during stop of the vehicle on a slope. Therefore, when braking is released in starting movement on the slope, the vehicle can smoothly start moving without moving backward.

Preferably, the drive unit further includes an accelerator sensor detecting an accelerator opening degree. Besides, the controller executes the first control when the accelerator opening degree is 0%.

Preferably, the controller executes a second control when the accelerator opening degree is greater than 0%. The second control is executed by the controller to stop the first control and control the torque outputted from the motor based on the accelerator opening degree.

Preferably, the drive unit further includes a vehicle velocity sensor detecting a vehicle velocity. Besides, the controller executes a third control when the accelerator opening degree is 0% and simultaneously the vehicle velocity is greater than a first threshold. The third control is executed by the controller to either control the torque outputted from the motor or execute a regenerative control such that the vehicle velocity becomes less than or equal to the first threshold.

Preferably, the drive unit further includes a vehicle velocity sensor detecting a vehicle velocity. Besides, the controller executes the first control when the vehicle velocity is less than or equal to a first threshold.

Preferably, the controller controls the torque outputted from the motor such that the torque increases with reduction in the braking operation amount in executing the first control.

Preferably, the controller makes zero the torque outputted from the motor when the braking operation amount is greater than or equal to a second threshold in executing the first control.

Overall, according to the present invention, it is possible to prevent a vehicle from moving backward in starting movement on a slope.

### BRIEF DESCRIPTION OF THE DRAWINGS

FIG. 1 is a schematic diagram of a drive unit.
FIG. 2 is a cross-sectional view of the drive unit.
FIG. 3 is a cross-sectional view of a torque converter.
FIG. 4 is a cross-sectional view of a type of impeller hub.
FIG. 5 is a cross-sectional view of another type of impeller hub.
FIG. 6 is a cross-sectional view of the drive unit shown for indicating a first cooling flow pathway.
FIG. 7 is a cross-sectional view of a sidewall portion of a type of cover.
FIG. 8 is a cross-sectional view of a sidewall portion of another type of cover.
FIG. 9 is a flowchart showing a method of controlling a controller.
FIG. 10 is a flowchart showing a method of controlling the controller.
FIG. 11 is a schematic diagram of a drive unit according to a modification.
FIG. 12 is a schematic diagram of a first one-way clutch according to another modification.
FIG. 13 is a schematic diagram of a drive unit according to yet another modification.

### DETAILED DESCRIPTION OF THE PREFERRED EMBODIMENTS

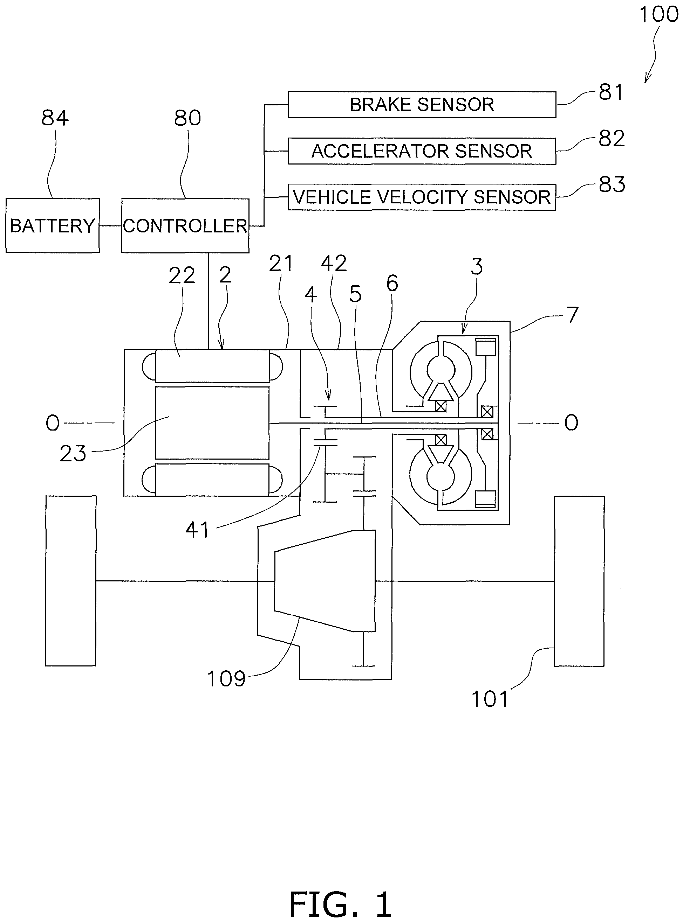

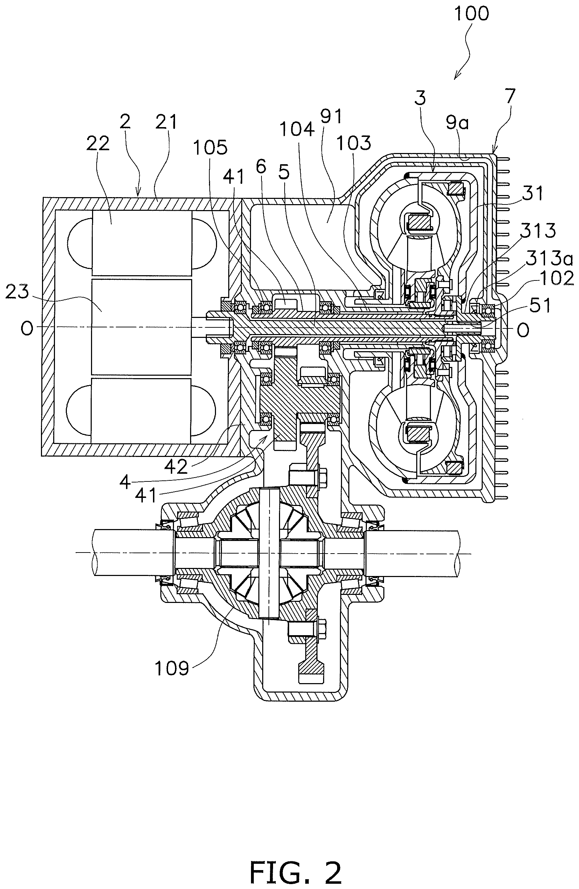

A preferred embodiment of a drive unit according to the present invention will be hereinafter explained with reference to drawings. FIG. 1 is a schematic diagram of the drive unit according to the present preferred embodiment, whereas FIG. 2 is a cross-sectional view of the drive unit according to the present preferred embodiment. It should be noted that in the following explanation, the term "axial direction" refers to an extending direction of a rotational axis O of a motor 2 and a torque converter 3. On the other hand, the term "circumferential direction" refers to a circumferential direction of an imaginary circle about the rotational axis O, whereas the term "radial direction" refers to a radial direction of the imaginary circle about the rotational axis O. Moreover, the term "forward rotation" refers to rotation in forward movement of a vehicle, whereas the term "reverse rotation" refers to rotation in backward movement of the vehicle.

### [Drive Unit 100]

As shown in FIGS. 1 and 2, a drive unit 100 includes the motor 2, the torque converter 3, a controller 80, a brake sensor 81, an accelerator sensor 82, a vehicle velocity sensor 83 and a battery 84. Besides, the drive unit 100 further includes a reducer 4, an input shaft 5, an output shaft 6, a torque converter casing 7, a hydraulic fluid sump 91 and a first cooling flow pathway 9a. The drive unit 100 is installed in an electric car. The drive unit 100 transmits a torque, outputted from the motor 2, to drive wheels 101. It should be noted that the torque converter 3, the torque converter casing 7, the hydraulic fluid sump 91 and the first cooling flow pathway 9a will be collectively referred to as a torque converter unit.

### <Motor 2>

The motor 2 includes a prime mover casing 21, a stator 22 and a rotor 23. In the present preferred embodiment, the motor 2 is a so-called inner rotor motor. The prime mover casing 21 is fixed to a vehicle body frame or so forth and is non-rotatable.

The stator 22 is fixed to the inner peripheral surface of the prime mover casing 21. The stator 22 is non-rotatable. The rotor 23 is rotated about the rotational axis O. The rotor 23 is disposed radially inside the stator 22.

### <Torque Converter 3>

The torque converter 3 is disposed at an interval from the motor 2 in the axial direction. The reducer 4 is disposed between the torque converter 3 and the motor 2. The rotational axis O of the torque converter 3 is substantially matched with that of the motor 2. The torque converter 3 is a device to which the torque, outputted from the motor 2, is inputted. Additionally, the torque converter 3 amplifies the torque inputted thereto from the motor 2, and outputs the amplified torque to the reducer 4.

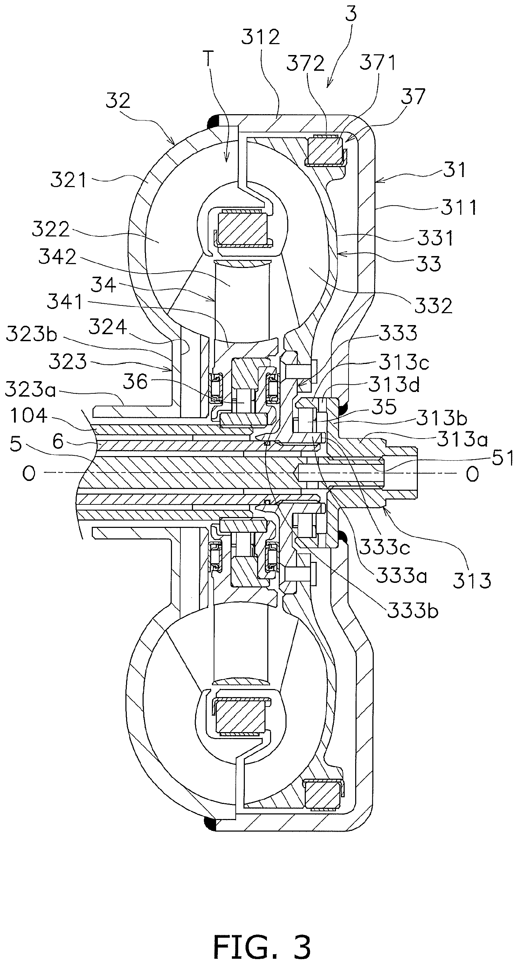

As shown in FIG. 3, the torque converter 3 includes a cover 31, an impeller 32, a turbine 33, a stator 34, a first one-way clutch 35 and a second one-way clutch 36. Besides, the torque converter 3 further includes a centrifugal clutch 37.

The torque converter 3 is disposed such that the impeller 32 faces the motor 2 (the left side in FIG. 3) whereas the cover 31 faces opposite to the motor 2 (the right side in FIG. 3). The torque converter 3 is accommodated in the interior of the torque converter casing 7. Hydraulic fluid is supplied to the interior of the torque converter 3. The hydraulic fluid is, for instance, hydraulic oil.

The cover 31 is a component to which the torque, outputted from the motor 2, is inputted. The cover 31 is rotated by the torque inputted thereto from the motor 2. The cover 31 is fixed to the input shaft 5 extending from the motor 2. For example, the cover 31 includes a spline hole to which the input shaft 5 is spline-coupled. Because of this, the cover 31 is unitarily rotated with the input shaft 5. The cover 31 is disposed to cover the turbine 33.

The cover 31 includes a disc portion 311, a cylindrical portion 312 and a cover hub 313. The disc portion 311 includes an opening in the middle thereof. The cylindrical portion 312 extends from the outer peripheral end of the disc portion 311 toward the motor 2. The disc portion 311 and the cylindrical portion 312 are provided as a single member.

The cover hub 313 is fixed to the inner peripheral end of the disc portion 311. In the present preferred embodiment, the cover hub 313 is provided as a member separated from the disc portion 311. However, the cover hub 313 may be provided together with the disc portion 311 as a single member.

The cover hub 313 includes a first boss portion 313a, a first flange portion 313b and a protruding portion 313c. The first boss portion 313a, the first flange portion 313b and the protruding portion 313c are provided as a single member.

The first boss portion 313a is made in the shape of a cylinder including a spline hole. The input shaft 5 is spline-coupled to the first boss portion 313a. As shown in FIG. 2, the first boss portion 313a is rotatably supported by the torque converter casing 7 through a bearing member 102. Because of this, the first boss portion 313a axially extends from the first flange portion 313b to the opposite side of the motor 2.

As shown in FIG. 3, the first flange portion 313b extends radially outward from the first boss portion 313a. Detailedly, the first flange portion 313b extends radially outward from the motor 2-side end of the first boss portion 313a. The disc portion 311 is fixed to the outer peripheral end of the first flange portion 313b.

The protruding portion 313c axially extends from the first flange portion 313b. The protruding portion 313c extends toward the motor 2. The protruding portion 313c extends from the outer peripheral end of the first flange portion 313b. The protruding portion 313c has a cylindrical shape. The protruding portion 313c includes a plurality of through holes 313d. The hydraulic fluid is discharged from the torque converter 3 through the through holes 313d.

The impeller 32 is rotated unitarily with the cover 31. The impeller 32 is fixed to the cover 31. The impeller 32 includes an impeller shell 321, a plurality of impeller blades 322, an impeller hub 323 and a plurality of supply flow pathways 324.

The impeller shell 321 is fixed to the cover 31. The plural impeller blades 322 are attached to the inner surface of the impeller shell 321.

The impeller hub 323 is attached to the inner peripheral end of the impeller shell 321. It should be noted that in the present preferred embodiment, the impeller hub 323 is provided together with the impeller shell 321 as a single member but may be provided as a member separated from the impeller shell 321.

The impeller hub 323 includes a second boss portion 323a and a second flange portion 323b. The second boss portion 323a has a cylindrical shape and axially extends. The second boss portion 323a is rotatably supported by the torque converter casing 7 through a bearing member 103 (see FIG. 2). A stationary shaft 104 axially extends in the interior of the second boss portion 323a. It should be noted that the stationary shaft 104 has a cylindrical shape and the output shaft 6 axially extends in the interior of the stationary shaft 104. Besides, the stationary shaft 104 extends from, for instance, a reducer casing 42 or the torque converter casing 7. The stationary shaft 104 is non-rotatable.

The supply flow pathways 324 are provided in the impeller hub 323. Detailedly, the supply flow pathways 324 are provided in the second flange portion 323b. The supply flow pathways 324 extend radially outward from the inner peripheral surface of the impeller hub 323. Additionally, the supply flow pathways 324 are opened to the interior of a torus T. It should be noted that the torus T is a space enclosed by the impeller 32 and the turbine 33.

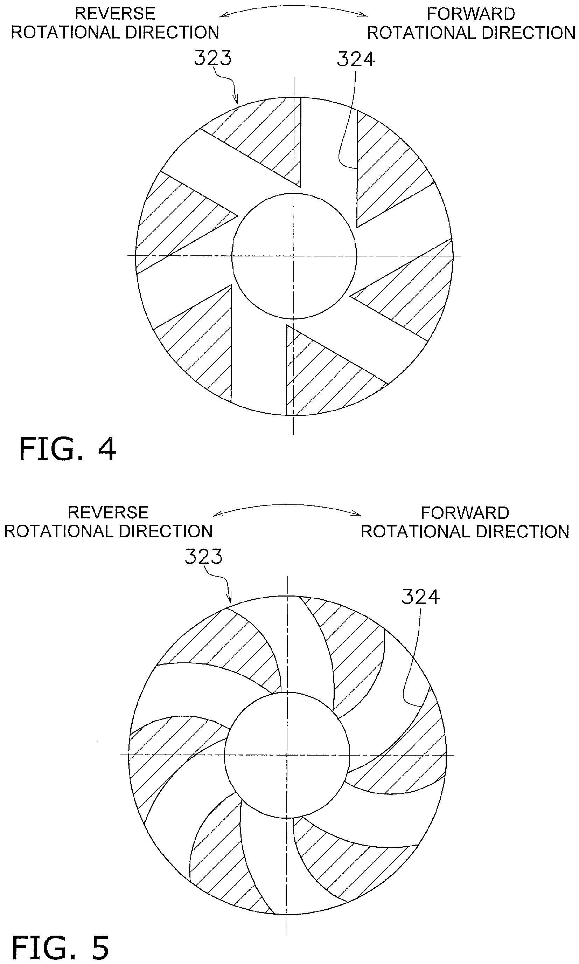

The supply flow pathways 324 are axially closed. In other words, the supply flow pathways 324 are through holes radially extending in the impeller hub 323. As shown in FIG. 4, the supply flow pathways 324 extend in a radial shape. The supply flow pathways 324 slant opposite to a forward rotational direction, while extending radially outward. In other words, the supply flow pathways 324 slant in a reverse rotational direction (counterclockwise in FIG. 4), while extending radially outward. It should be noted that the extending shape of each supply flow pathway 324 is not limited to a straight shape. For example, as shown in FIG. 5, each supply flow pathway 324 may extend in a curved shape.

As shown in FIG. 3, the turbine 33 is disposed in opposition to the impeller 32. Detailedly, the turbine 33 is axially opposed to the impeller 32. The turbine 33 is a component to which a torque is transmitted from the impeller 32 through the hydraulic fluid.

The turbine 33 includes a turbine shell 331, a plurality of turbine blades 332 and a turbine hub 333. The turbine blades 332 are fixed to the inner surface of the turbine shell 331.

The turbine hub 333 is fixed to the inner peripheral end of the turbine shell 331. For example, the turbine hub 333 is fixed to the turbine shell 331 by at least one rivet. In the present preferred embodiment, the turbine hub 333 is provided as a member separated from the turbine shell 331. However, the turbine hub 333 may be provided together with the turbine shell 331 as a single member.

The output shaft 6 is attached to the turbine hub 333. Detailedly, the output shaft 6 is spline-coupled to the turbine hub 333. The turbine hub 333 is unitarily rotated with the output shaft 6.

The turbine hub 333 includes a third boss portion 333a and a third flange portion 333b. The third boss portion 333a and the third flange portion 333b are provided as a single member.

The third boss portion 333a has a cylindrical shape and includes a spline hole. The output shaft 6 is spline-coupled to the third boss portion 333a. The third boss portion 333a axially extends from the third flange portion 333b to the opposite side of the motor 2. In other words, the third boss portion 333a axially extends from the third flange portion 333b toward the cover hub 313.

The third boss portion 333a is disposed at a radial interval from the protruding portion 313c. In other words, the protruding portion 313c is disposed radially outside the third boss portion 333a. The first one-way clutch 35 is disposed between the third boss portion 333a and the protruding portion 313c. It should be noted that without installation of the first one-way clutch 35, the outer peripheral surface of the third boss portion 333a and the inner peripheral surface of the protruding portion 313c are opposed to each other.

A flow pathway is provided between the cover hub 313 and the distal end of the third boss portion 333a such that the hydraulic fluid flows therethrough. In the present preferred embodiment, the third boss portion 333a is provided with a plurality of cutouts 333c on the distal end thereof. The cutouts 333c radially extend on the distal end of the third boss portion 333a. The hydraulic fluid is discharged from the torque converter 3 through the cutouts 333c and the through holes 313d.

The third flange portion 333b extends radially outward from the third boss portion 333a. Detailedly, the third flange portion 333b extends radially outward from the motor 2-side end of the third boss portion 333a. The turbine shell 331 is fixed to the outer peripheral end of the third flange portion 333b by the at least one rivet or so forth.

The stator 34 is configured to regulate the flow of the hydraulic fluid (hydraulic oil) returning from the turbine 33 to the impeller 32. The stator 34 is rotatable about the rotational axis O. For example, the stator 34 is supported by the stationary shaft 104 through the second one-way clutch 36. The stator 34 is disposed axially between the impeller 32 and the turbine 33.

The stator 34 includes a stator carrier 341 having a disc shape and a plurality of stator blades 342 attached to the outer peripheral surface of the stator carrier 341.

The first one-way clutch 35 is disposed between the cover 31 and the turbine 33. The first one-way clutch 35 makes the cover 31 rotatable relative to the turbine 33 in the forward rotational direction. In other words, when the motor 2 is forwardly rotated to move the vehicle forward, the first one-way clutch 35 is configured such that the cover 31 is rotated relative to the turbine 33. Because of this, in forward movement of the vehicle, the first one-way clutch 35 does not transmit a torque from the cover 31 to the turbine 33.

By contrast, the first one-way clutch 35 makes the cover 31 rotate unitarily with the turbine 33 in the reverse rotational direction. In other words, when the motor 2 is reversely rotated to move the vehicle backward, the first one-way clutch 35 is configured such that the cover 31 is rotated unitarily with the turbine 33. Because of this, in backward movement of the vehicle, the first one-way clutch 35 transmits a torque from the cover 31 to the turbine 33.

The second one-way clutch 36 is disposed between the stationary shaft 104 and the stator 34. The second one-way clutch 36 is configured to make the stator 34 rotatable in the forward rotational direction. By contrast, the second one-way clutch 36 makes the stator 34 non-rotatable in the reverse rotational direction. The torque is transmitted from the impeller 32 to the turbine 33, while being amplified by the stator 34.

The centrifugal clutch 37 is attached to the turbine 33. The centrifugal clutch 37 is unitarily rotated with the turbine 33. The centrifugal clutch 37 is configured to couple the cover 31 and the turbine 33 to each other by a centrifugal force generated in rotation of the turbine 33. Detailedly, the centrifugal clutch 37 is configured to transmit the torque from the cover 31 to the turbine 33 when the rotational speed of the turbine 33 becomes greater than or equal to a predetermined value.

The centrifugal clutch 37 includes a plurality of centrifugal elements 371 and a plurality of friction materials 372. The friction materials 372 are attached to the outer peripheral surfaces of the centrifugal elements 371, respectively. The centrifugal elements 371 are disposed while being radially movable. It should be noted that the centrifugal elements 371 are disposed while being circumferentially immovable. Because of this, the centrifugal elements 371 are rotated together with the turbine 33 and are moved radially outward by centrifugal forces.

When the rotational speed of the turbine 33 becomes greater than or equal to the predetermined value, the centrifugal clutch 37 is configured such that the centrifugal elements 371 are moved radially outward and the friction materials 372 are engaged by friction with the inner peripheral surface of the cylindrical portion 312 of the cover 31. As a result, the centrifugal clutch 37 is turned to an on state, and the torque inputted to the cover 31 is transmitted therefrom to the turbine 33 through the centrifugal clutch 37. It should be noted that even when the centrifugal clutch 37 is turned to the on state, the hydraulic fluid is capable of flowing through the centrifugal clutch 37.

When the rotational speed of the turbine 33 becomes less than the predetermined value, the centrifugal elements 371 are moved radially inward, whereby the friction materials 372 and the inner peripheral surface of the cylindrical portion 312 of the cover 31, engaged by friction, are disengaged from each other. As a result, the centrifugal clutch 37 is turned to an off state, and the torque inputted to the cover 31 is not transmitted therefrom to the turbine 33 through the centrifugal clutch 37. In other words, the torque inputted to the cover 31 is transmitted therefrom to the impeller 32, and is then transmitted to the turbine 33 through the hydraulic fluid.

### <Reducer 4>

As shown in FIG. 2, the reducer 4 is disposed axially between the motor 2 and the torque converter 3. The reducer 4 transmits a torque, inputted thereto from the torque converter 3, to the drive wheel 101 side. Detailedly, the reducer 4 amplifies the torque inputted thereto from the torque converter 3 and transmits the amplified torque to the drive wheel 101 side through a differential gear 109. It should be noted that the reducer 4 includes a plurality of gears 41 and the reducer casing 42 accommodating the respective gears 41. It should be also noted that one of the plural gears 41 is fixed to the output shaft 6. In the present preferred embodiment, one of the gears 41 is provided together with the output shaft 6 as a single member.

### <Input Shaft 5>

The input shaft 5 extends from the motor 2. The input shaft 5 extends toward the torque converter 3. The rotational axis of the input shaft 5 is substantially matched with that of the motor 2 and that of the torque converter 3.

The input shaft 5 inputs the torque, outputted from the motor 2, to the torque converter 3. The input shaft 5 is attached at the distal end thereof to the cover hub 313 of the torque converter 3. The input shaft 5 is unitarily rotated with the rotor 23 of the motor 2. The input shaft 5 extends through the interior of the output shaft 6. The input shaft 5 is solid. The input shaft 5 includes a communicating pathway 51 in the distal end thereof. The communicating pathway 51 extends in the axial direction. Besides, the communicating pathway 51 is opened toward the first cooling flow pathway 9a.

### <Output Shaft 6>

The output shaft 6 outputs the torque inputted thereto from the torque converter 3. The output shaft 6 outputs the torque, inputted thereto from the torque converter 3, to the reducer 4. The output shaft 6 extends from the torque converter 3 toward the motor 2.

The output shaft 6 has a cylindrical shape. The input shaft 5 extends through the interior of the output shaft 6. The output shaft 6 is attached at one end (the right end in FIG. 2) to the turbine 33 of the torque converter 3. On the other hand, the output shaft 6 is rotatably supported at the other end (the left end in FIG. 2) by the reducer casing 42 through a bearing member 105.

### <Torque Converter Casing 7>

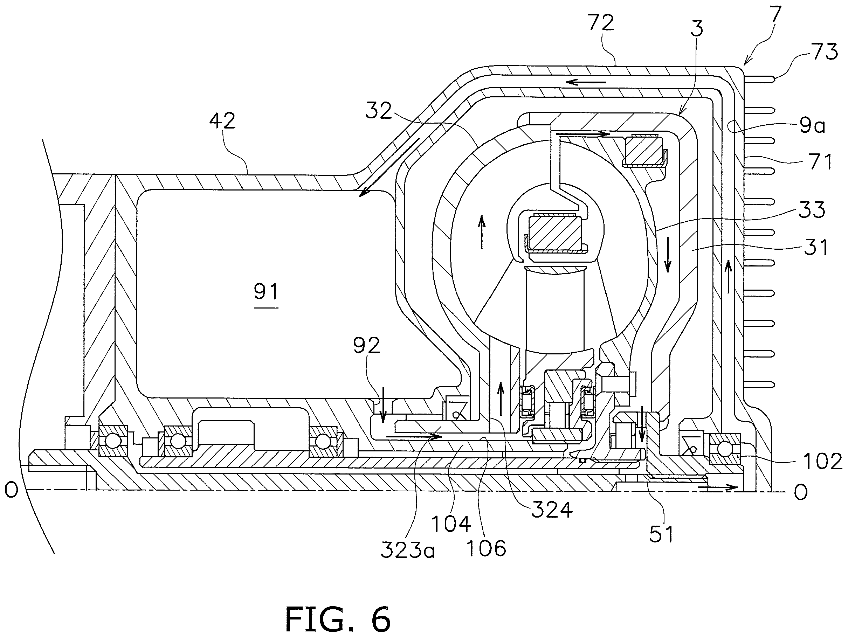

As shown in FIG. 6, the torque converter casing 7 accommodates the torque converter 3. In the present preferred embodiment, the torque converter casing 7 is provided together with the reducer casing 42 as a single member. However, the torque converter casing 7 may be provided as a member separated from the reducer casing 42.

The torque converter casing 7 includes a side wall portion 71, an outer wall portion 72 and a plurality of heat dissipation fins 73. The sidewall portion 71 is disposed in opposition to the cover 31 of the torque converter 3. The sidewall portion 71 is disposed orthogonal to the rotational axis O.

The torque converter 3 is disposed on one axial side (the left side in FIG. 6) of the sidewall portion 71. On the other hand, the sidewall portion 71 makes contact at the other side (the right lateral surface in FIG. 6) with external air. In other words, a member, functioning as a heat source, is not disposed on the other side of the sidewall portion 71.

The cover 31 is rotatably attached to the middle part of the sidewall portion 71 through the bearing member 102. The sidewall portion 71 is made of a material, having a high specific heat and a high thermal conductivity, so as to quickly absorb a large amount of heat from the hydraulic fluid flowing through the first cooling flow pathway 9a and release the absorbed heat to the atmosphere. For example, the sidewall portion 71 is made of magnesium, aluminum or so forth.

The outer wall portion 72 is disposed in opposition to the outer peripheral surface of the torque converter 3. The outer wall portion 72 is provided together with the sidewall portion 71 as a single member. However, the outer wall portion 72 may be provided as a member separated from the sidewall portion 71. The outer wall portion 72 extends toward the motor 2 from the outer peripheral end of the sidewall portion 71. The outer wall portion 72 extends substantially in parallel to the rotational axis O. It should be noted that the distal end (the motor 2-side end) of the outer wall portion 72 slants radially inward. The outer wall portion 72 can be made of a similar material to the sidewall portion 71.

The heat dissipation fins 73 are provided on the sidewall portion 71. The heat dissipation fins 73 extend from the sidewall portion 71 to the opposite side (rightward in FIG. 6) of the torque converter 3. The heat dissipation fins 73 are attached to the sidewall portion 71 in order to efficiently dissipate the heat of the hydraulic fluid flowing through the first cooling flow pathway 9a. The thermal conductivity of the heat dissipation fins 73 is preferably set to be equivalent to or higher than that of the sidewall portion 71 but is not particularly limited to this setting. The heat dissipation fins 73 are made of, for instance, magnesium, aluminum, copper or so forth.

### <First Cooling Flow Pathway 9a>

The first cooling flow pathway 9a is a flow pathway for cooling the hydraulic fluid discharged from the torque converter 3. The first cooling flow pathway 9a extends in the interior of the torque converter casing 7. In the present preferred embodiment, the first cooling flow pathway 9a is provided only in the upper half of the torque converter casing 7 (see FIG. 2).

The first cooling flow pathway 9a extends from the middle part to the outer peripheral part in the interior of the sidewall portion 71 and axially extends therefrom beyond the torque converter 3 in the interior of the outer wall portion 72. The first cooling flow pathway 9a is communicated with the hydraulic fluid sump 91.

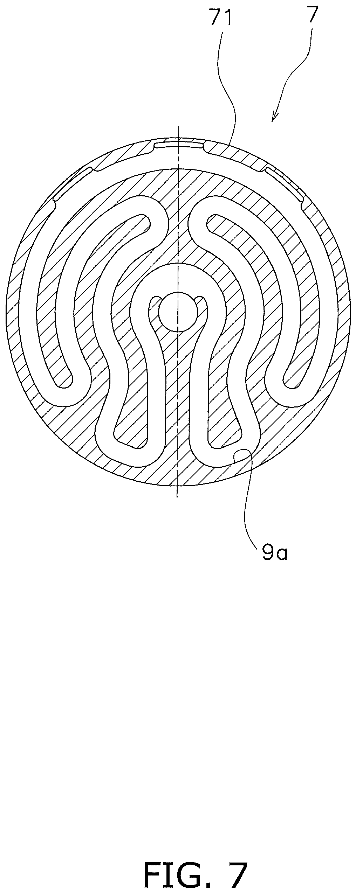

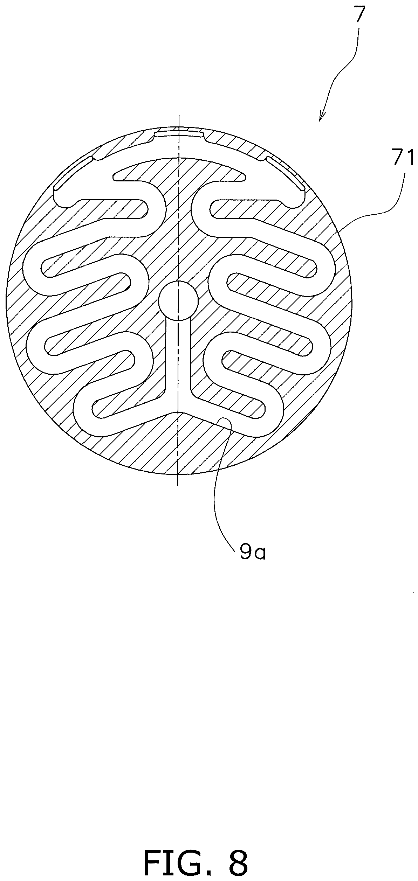

As shown in FIG. 7 or FIG. 8, the first cooling flow pathway 9a includes a plurality of paths in the interior of the sidewall portion 71. In the present preferred embodiment, the first cooling flow pathway 9a is divided into two paths in the interior of the sidewall portion 71. In the interior of the sidewall portion 71, the first cooling flow pathway 9a extends from the middle part to the outer peripheral part not in a straight shape but in a winding shape.

The first cooling flow pathway 9a may include a plurality of paths in the interior of the outer wall portion 72 as well. In the present preferred embodiment, the first cooling flow pathway 9a is divided into, for instance, three paths in the interior of the outer wall portion 72. The first cooling flow pathway 9a axially extends in a straight shape in the interior of the outer wall portion 72. Alternatively, the first cooling flow pathway 9a may extend in a winding shape in the interior of the outer wall portion 72.

### [Hydraulic Fluid Sump 91]

As shown in FIG. 6, the hydraulic fluid sump 91 is disposed to axially interpose the torque converter 3 together with the sidewall portion 71 therebetween. In other words, the hydraulic fluid sump 91, the torque converter 3 and the sidewall portion 71 are axially aligned in this order. The hydraulic fluid sump 91 is disposed in the interior of the reducer casing 42. The hydraulic fluid sump 91 is disposed above the rotational axis O.

The hydraulic fluid sump 91 contains the hydraulic fluid to be supplied to the torque converter 3 in the interior thereof. The hydraulic fluid sump 91 is provided with a supply port 92 in the bottom surface thereof. The hydraulic fluid, discharged from the supply port 92, is supplied to the torque converter 3 through a flow pathway 106 provided between the stationary shaft 104 and the second boss portion 323a of the impeller hub 323.

Specifically, a centrifugal force is generated in rotation of the impeller 32 of the torque converter 3, whereby the hydraulic fluid residing in the interior of the flow pathway 106 is supplied to the interior of the torus T through the supply flow pathways 324. Then, the hydraulic fluid, discharged from the torque converter 3, flows to the first cooling flow pathway 9a through the communicating pathway 51. Subsequently, the hydraulic fluid, cooled while flowing through the first cooling flow pathway 9a, is returned to the hydraulic fluid sump 91.

### <Various Types of Sensors>

As shown in FIG. 1, the brake sensor 81, the accelerator sensor 82 and the vehicle velocity sensor 83 are connected to the controller 80 by wired or wireless means such that information is communicable therebetween. The brake sensor 81 is configured to detect a braking operation amount. For example, the brake sensor 81 is configured to detect the amount of stroke of a brake pedal, a tread force or so forth. The brake sensor 81 outputs the detected braking operation amount to the controller 80.

The accelerator sensor 82 is configured to detect an accelerator opening degree. The accelerator sensor 82 outputs the detected accelerator opening degree to the controller 80.

The vehicle velocity sensor 83 is configured to detect the velocity of a vehicle in which the drive unit 100 is installed. The vehicle velocity sensor 83 outputs the detected vehicle velocity to the controller 80.

### <Controller 80>

The controller 80 is configured to control a torque outputted from the motor 2. For example, the controller 80 includes an ECU (Electronic Control Unit), a PCU (Power Control Unit) and so forth. The controller 80 causes the motor 2 and the battery 84 to transmit and receive electric power therebetween through an inverter circuit and a converter circuit, both of which are included in the PCU. The controller 80 is capable of controlling the torque outputted from the motor 2 by controlling the electric power outputted from the battery 84.

The controller 80 executes first, second and third controls. For example, the controller 80 determines which of the first, second and third controls should be executed based on the accelerator opening degree and the vehicle velocity. More specifically, the controller 80 determines whether or not the accelerator opening degree is greater than 0%. When the accelerator opening degree is 0%, i.e., when the accelerator is not being operated, the controller 80 executes the first or third control. On the other hand, when the accelerator opening degree is greater than 0%, i.e., when the accelerator is being operated, the controller 80 executes the second control.

Furthermore, when the vehicle velocity is less than or equal to a first threshold, the controller 80 executes the first control. The first threshold, albeit not limited to a specific value, is set to be, for instance, 10 km/h. Detailedly, when the accelerator opening degree is 0% and simultaneously the vehicle velocity is less than or equal to the first threshold, the controller 80 executes the first control. On the other hand, when the vehicle velocity is greater than the first threshold, the controller 80 executes the third control. Detailedly, when the accelerator opening degree is 0% and simultaneously the vehicle velocity is greater than the first threshold, the controller 80 executes the third control.

When executing the first control, the controller 80 controls the torque outputted from the motor 2 based on the braking operation amount. Detailedly, the controller 80 obtains the braking operation amount from the brake sensor 81. Then, the controller 80 determines whether or not the braking operation amount is greater than or equal to a second threshold.

When determining that the braking operation amount is greater than or equal to the second threshold, the controller 80 makes zero the torque outputted from the motor 2. In other words, the controller 80 stops the motor 2. On the other hand, when determining that the braking operation amount is less than the second threshold, the controller 80 drives the motor 2. For example, the controller 80 drives the motor 2 such that the torque outputted from the motor 2 increases with reduction in braking operation amount.

On the other hand, when executing the second control, the controller 80 stops the first control and controls the torque outputted from the motor 2 based on the accelerator opening degree. In other words, when executing the second control, the controller 80 controls the torque outputted from the motor 2 based on the accelerator opening degree regardless of the braking operation amount.

When executing the third control, the controller 80 either controls the torque outputted from the motor 2 or executes regenerative control such that the vehicle velocity becomes less than or equal to the first threshold. For example, the controller 80 decelerates the vehicle such that the vehicle velocity becomes less than or equal to the first threshold by regulating the regenerative amount of the motor 2.

### <Control Method>

Next, a control method employed by the controller 80 will be explained.

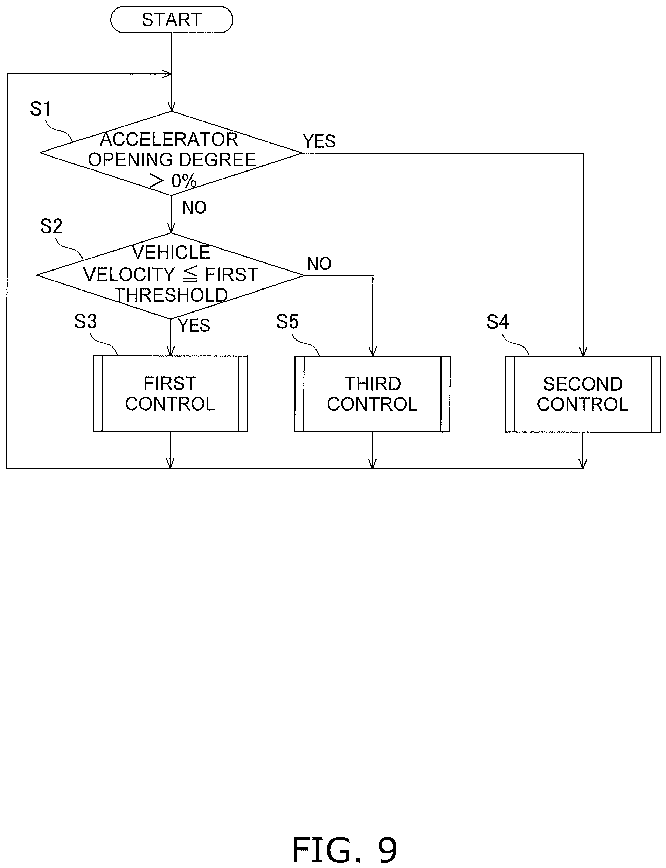

As shown in FIG. 9, the controller 80 determines whether or not an accelerator pedal is being operated (step S1). Specifically, the controller 80 determines whether or not the accelerator pedal is being operated based on the accelerator opening degree detected by the accelerator sensor 82. When determining that the accelerator opening degree is greater than 0% (Yes in step S1), the controller 80 executes the second control (step S4).

On the other hand, when determining that the accelerator opening degree is 0% (No in step S1), the controller 80 then determines whether or not the vehicle velocity is less than or equal to the first threshold (step S2). Specifically, the controller 80 determines whether or not the vehicle velocity detected by the vehicle velocity sensor 83 is less than or equal to the first threshold. When determining that the vehicle velocity is less than or equal to the first threshold (Yes in step S2), the controller 80 executes the first control (step S3). On the other hand, when determining that the vehicle velocity is greater than the first threshold (No in step S2), the controller 80 executes the third control (step S5).

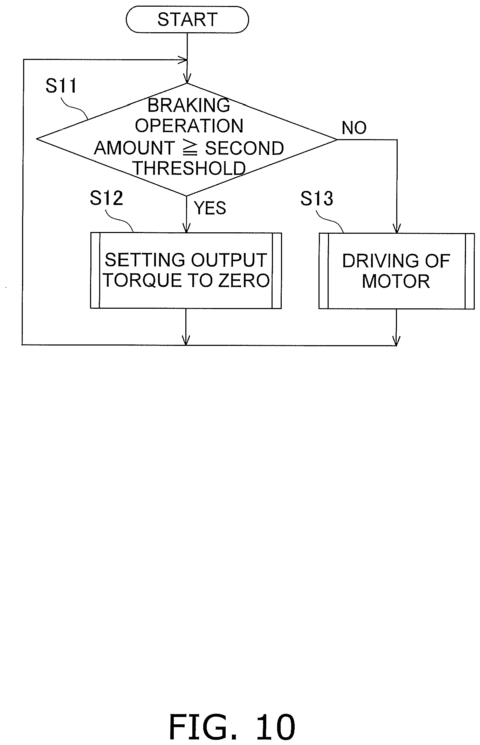

Next, a control method employed by the controller 80 in executing the first control will be explained. As shown in FIG. 10, when executing the first control, the controller 80 determines whether or not the braking operation amount is greater than or equal to the second threshold (step S11). When determining that the braking operation amount is greater than or equal to the second threshold (Yes in step S11), the controller 80 makes zero the torque outputted from the motor 2. In other words, the controller 80 stops the motor 2 (step S12).

On the other hand, when determining that the braking operation amount is less than the second threshold (No in step S11), the controller 80 drives the motor 2 (step S13). Specifically, the controller 80 increases the torque outputted from the motor 2 with reduction in braking operation amount.

According to the configuration described above, the following action is enabled when a vehicle starts moving on a slope. First in general, while the car is being stopped on the slope, the braking operation amount is greater than or equal to the second threshold. Because of this, the controller 80 makes zero the torque outputted from the motor 2, whereby the motor 2 is being stopped.

Next, the brake pedal is gradually depressed when the vehicle starts moving, whereby the braking operation amount is gradually reduced. In accordance with this, the controller 80 gradually increases the torque outputted from the motor 2. It should be noted that the brake pedal is not being completely released, and hence, the vehicle is kept stopped by a braking force applied by friction braking and so forth.

Next, when the brake pedal is released, the vehicle is enabled to smoothly start moving on the slope without moving backward, because the motor 2 has been already driven. It should be noted that immediately before the vehicle starts moving, the motor 2 is being driven by the controller 80 while the vehicle is being stopped. The motor 2, when driven, can be herein rotated even while the vehicle is being stopped, because the drive unit 100 according to the present preferred embodiment includes the torque converter 3. Because of this, motor 2 can be inhibited from generating heat.

### Modification 1

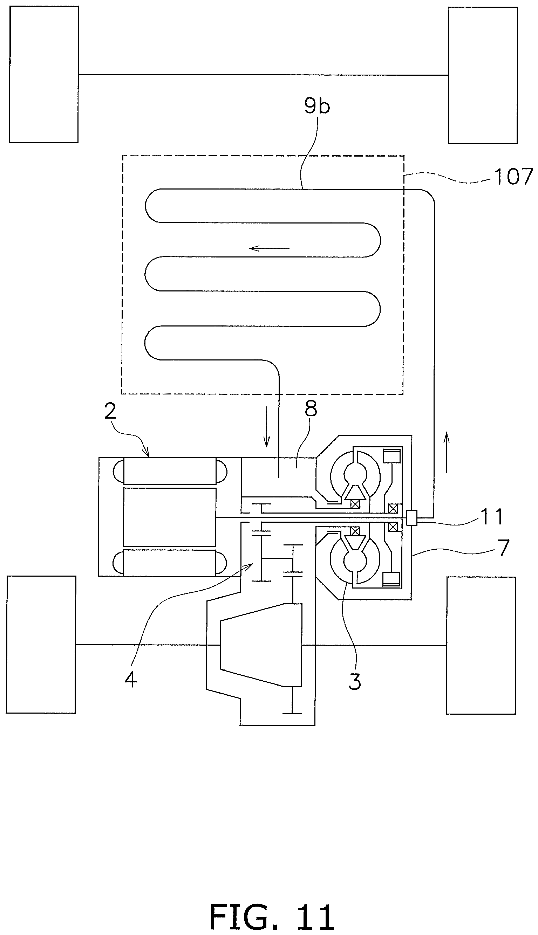

As shown in FIG. 11, the torque converter unit may further include a second cooling flow pathway 9b. The second cooling flow pathway 9b extends through the interior of a compartment 107 of a vehicle into which the torque converter unit is installed. The hydraulic fluid, discharged from the torque converter 3, flows through the second cooling flow pathway 9b. The hydraulic fluid, flowing through the second cooling flow pathway 9b, is cooled while dissipating heat thereof into the compartment 107.

The hydraulic fluid is supplied to the second cooling flow pathway 9b from the communicating pathway 51. Additionally, the hydraulic fluid is returned to the hydraulic fluid sump 91 through the second cooling flow pathway 9b.

The torque converter unit further includes a selector mechanism 11. The selector mechanism 11 is configured to select either the first cooling flow pathway 9a or the second cooling flow pathway 9b as a cooling flow pathway for supplying the hydraulic fluid discharged from the torque converter 3.

### Modification 2

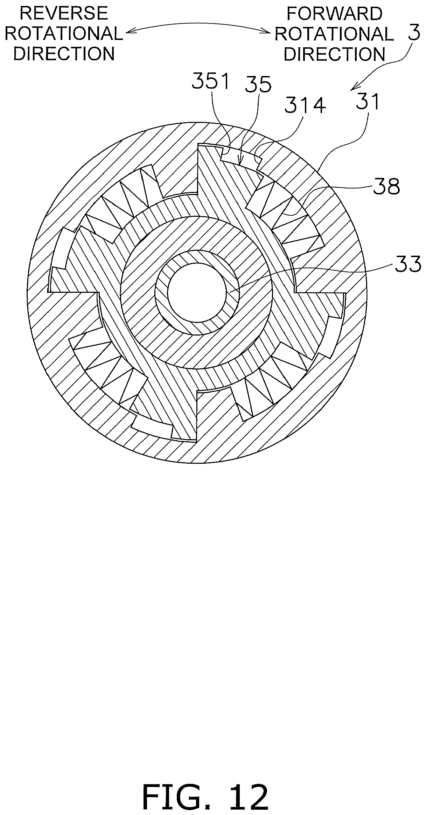

As shown in FIG. 12, the torque converter 3 may further include a plurality of elastic members 38. The elastic members 38 are disposed circumferentially between the first one-way clutch 35 and the cover 31. The elastic members 38 transmit a torque applied in the reverse rotational direction from the cover 31 to the first one-way clutch 35. It should be noted that, when the cover 31 is rotated with respect to the first one-way clutch 35 by more than a predetermined angle in the reverse rotational direction, first stopper surfaces 314 of the cover 31 make contact with second stopper surfaces 351 of the first one-way clutch 35. As a result, the torque, applied from the cover 31, is directly transmitted to the first one-way clutch 35.

In reverse rotation as described above, the torque, applied from the cover 31, is firstly transmitted to the first one-way clutch 35 through the elastic members 38, whereby massive and sudden torque transmission can be eased.

It should be noted that the elastic members 38 may be disposed circumferentially between the first one-way clutch 35 and the turbine 33. In this case, the elastic members 38 transmit a torque, applied from the first one-way clutch 35 in the reverse rotational direction, to the turbine 33.

### Modification 3

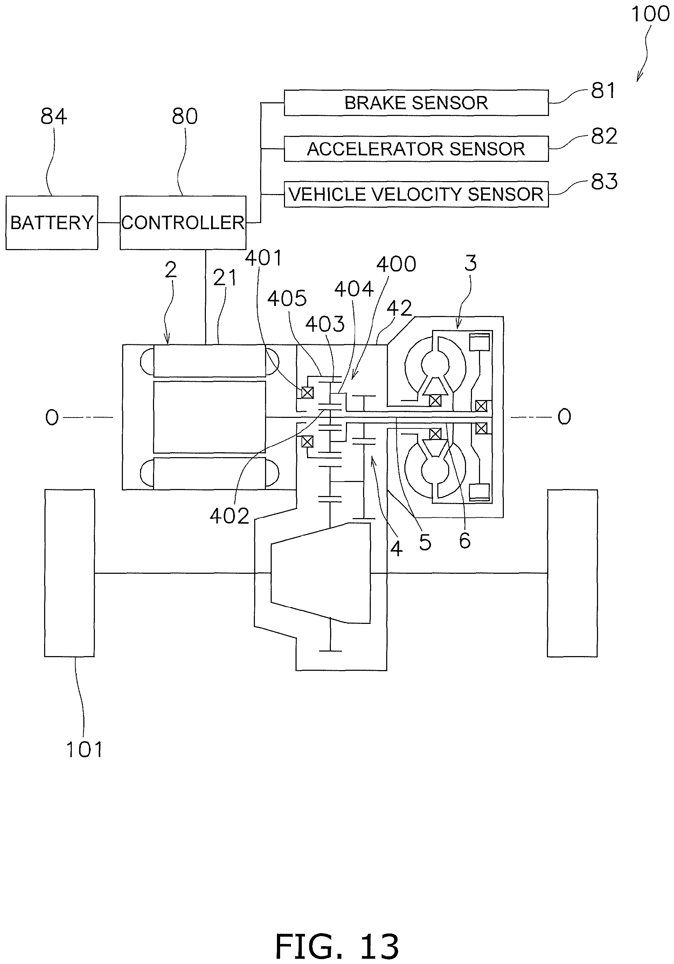

As shown in FIG. 13, the present power transmission mechanism may include a planetary gear mechanism 400 and a clutch 401. The planetary gear mechanism 400 includes a sun gear 402, a plurality of planet gears 403, a planet carrier 404 and a ring gear 405.

The sun gear 402 is attached to the input shaft 5. The sun gear 402 is unitarily rotated with the input shaft 5. The planet carrier 404 is attached to the output shaft 6. The planet carrier 404 is unitarily rotated with the output shaft 6.

The clutch 401 is disposed between a non-rotatable member (e.g., the reducer casing 42 or the prime mover casing 21) and the ring gear 405. Besides, the clutch 401 is configured to brake rotation of the ring gear 405.

The clutch 401 is, for instance, a one-way clutch. The clutch 401 makes the ring gear 405 rotatable in forward rotation of the input shaft 5 and the output shaft 6. By contrast, the clutch 401 makes the ring gear 405 non-rotatable in reverse rotation of the input shaft 5 and the output shaft 6.

According to this configuration, when the input shaft 5 and the output shaft 6 are forwardly rotated, in other words, when the vehicle is forwardly moved, the ring gear 405 is being rotated without being fixed, whereby an amplifying action does not work in the planetary gear mechanism 400. Because of this, the torque, outputted from the motor 2, is transmitted to the drive wheels 101 through the torque converter 3 and the reducer 4.

By contrast, when the input shaft 5 and the output shaft 6 are reversely rotated, in other words, when the vehicle is backwardly moved, the clutch 401 makes the ring gear 405 non-rotatable, whereby the amplifying function works in the planetary gear mechanism 400. Because of this, the torque, outputted from the motor 2, is transmitted to the drive wheels 101 through the reducer 4, while being amplified by the planetary gear mechanism 400.

### REFERENCE SIGNS LIST

11 Selector mechanism
2 Motor (electric)
21 Primary casing
22 Stator (of motor)
23 Rotor
3 Torque converter
31 Cover
311 Disc portion
312 Cylindrical portion
313 Cover hub
313a First boss portion
313b First flange portion
313c Protruding portion
313d Through hole
314 First stopper surface
32 Impeller
321 Impeller shell
322 Impeller blade
323 Impeller hub
323a Second boss portion
323b Second flange portion
324 Supply flow pathway
33 Turbine
331 Turbine shell
332 Turbine blade
333 Turbine hub
333a Third boss portion
333b Third flange portion
333c Cutout
34 Stator (of torque converter)
341 Stator carrier
342 Stator blade
35 First one-way clutch
351 First stopper surface
36 Second one-way clutch
37 Centrifugal clutch
371 Centrifugal element
372 Friction material
38 Elastic member
4 Reducer
41 Gear
42 Reducer casing
5 Input shaft
51 Communication pathway
6 Output shaft
7 Torque converter casing
71 Sidewall portion
72 Outer wall portion
73 Heat dissipation fin
9a first cooling flow pathway 9b Second cooling flow pathway
80 Controller
81 Brake sensor
82 Accelerator sensor
83 Vehicle velocity sensor
84 Battery
91 Hydraulic fluid sump
100 Drive unit
101 Drive wheel
102 Bearing member
103 Bearing member
104 Stationary shaft
105 Bearing member
106 Flow pathway
107 Compartment
109 Differential gear
400 Planetary gear mechanism
401 Clutch
402 Sun gear
403 Planet gear
404 Planet carrier
405 Ring gear
O Rotational axis
T Torus

## Claims

1. A drive unit (100) for a vehicle comprising:
an electric motor (2);
a brake sensor (81) detecting a braking operation amount; and
a controller (80);
**characterized in that** the drive unit (100) further comprises a torque converter (3) to which a torque outputted from the motor (2) is inputted and **in that** the controller (80) is configured for executing a first control (S3) of controlling the torque outputted from the motor (2) based on the braking operation amount such that, even during stop of the vehicle, the motor (2) can be kept rotated.

2. The drive unit (100) according to claim 1, further comprising:
an accelerator sensor (82) detecting an accelerator opening degree, wherein
the controller (80) executes the first control (S3) when the accelerator opening degree is 0%.

3. The drive unit (100) according to claim 2, wherein the controller (80) executes a second control when the accelerator opening degree is greater than 0%, the second control executed to stop the first control and control the torque outputted from the motor (2) based on the accelerator opening degree.

4. The drive unit (100) according to claim 2 or 3, further comprising:
a vehicle velocity sensor (83) detecting a vehicle velocity, wherein
the controller (80) executes a third control when the accelerator opening degree is 0% and simultaneously the vehicle velocity is greater than a first threshold, the third control executed to either control the torque outputted from the motor (2) or execute a regenerative control such that the vehicle velocity becomes less than or equal to the first threshold.

5. The drive unit (100) according to any of claims 1 to 3, further comprising:
a vehicle velocity sensor (83) detecting a vehicle velocity, wherein
the controller (80) executes the first control (S3) when the vehicle velocity is less than or equal to a first threshold.

6. The drive unit (100) according to any of claims 1 to 5, wherein the controller (80) controls the torque outputted from the motor (2) such that the torque increases with reduction in the braking operation amount in executing the first control.

7. The drive unit (100) according to any of claims 1 to 6, wherein the controller (80) makes zero the torque outputted from the motor (2) when the braking operation amount is greater than or equal to a second threshold in executing the first control.

## Patentansprüche

1. Antriebseinheit (100) für ein Fahrzeug, umfassend:
einen Elektromotor (2);
einen Bremssensor (81), der einen Bremsbetätigungsbetrag erfasst; und
eine Steuereinheit (80);
**dadurch gekennzeichnet, dass** die Antriebseinheit (100) ferner einen Drehmomentwandler (3) umfasst, in den ein von dem Motor (2) ausgegebenes Drehmoment eingegeben wird, und dass die Steuereinheit (80) derart konfiguriert ist, dass sie eine erste Steuerung (S3) zur Steuerung des von dem Motor (2) ausgegebenen Drehmoments auf der Grundlage des Bremsbetätigungsbetrags ausführt, so dass der Motor (2) sogar während des Anhaltens des Fahrzeugs in Drehung gehalten werden kann.

2. Antriebseinheit (100) nach Anspruch 1, ferner umfassend:
einen Beschleunigersensor (82), der einen Beschleunigeröffnungsgrad erfasst, wobei die Steuereinheit (80) die erste Steuerung (S3) ausführt,
wenn der Öffnungsgrad des Beschleunigers 0% beträgt.

3. Antriebseinheit (100) nach Anspruch 2, wobei die Steuereinheit (80) eine zweite Steuerung ausführt, wenn der Beschleunigeröffnungsgrad größer als 0% ist, wobei die zweite Steuerung ausgeführt wird, um die erste Steuerung zu stoppen und das von dem Motor (2) ausgegebene Drehmoment auf der Grundlage des Beschleunigeröffnungsgrads zu steuern.

4. Antriebseinheit (100) nach Anspruch 2 oder 3, ferner umfassend:
einen Fahrzeuggeschwindigkeitssensor (83), der eine Fahrzeuggeschwindigkeit erfasst, wobei
die Steuereinheit (80) eine dritte Steuerung ausführt, wenn der Beschleunigeröffnungsgrad 0% beträgt und gleichzeitig die Fahrzeuggeschwindigkeit größer als ein erster Schwellenwert ist, wobei die dritte Steuerung ausgeführt wird, um entweder das vom Motor (2) ausgegebene Drehmoment zu steuern oder eine Regenerationssteuerung auszuführen, so dass die Fahrzeuggeschwindigkeit kleiner oder gleich dem ersten Schwellenwert wird.

5. Antriebseinheit (100) nach einem der Ansprüche 1 bis 3, ferner umfassend:
einen Fahrzeuggeschwindigkeitssensor (83), der eine Fahrzeuggeschwindigkeit erfasst, wobei
die Steuereinheit (80) die erste Steuerung (S3) ausführt, wenn die Fahrzeuggeschwindigkeit kleiner oder gleich einem ersten Schwellenwert ist.

6. Antriebseinheit (100) nach einem der Ansprüche 1 bis 5, wobei die Steuereinheit (80) das von dem Motor (2) abgegebene Drehmoment so steuert, dass das Drehmoment bei der Ausführung der ersten Steuerung mit der Verringerung des Bremsbetätigungsbetrags zunimmt.

7. Antriebseinheit (100) nach einem der Ansprüche 1 bis 6, wobei die Steuereinheit (80) das von dem Motor (2) abgegebene Drehmoment auf Null setzt, wenn der Bremsbetätigungsbetrag bei Ausführung der ersten Steuerung größer oder gleich einem zweiten Schwellenwert ist.

## Revendications

1. Unité d'entraînement (100) pour un véhicule comprenant:
un moteur électrique (2);
un capteur de freinage (81) détectant une quantité d'opération de freinage; et
un dispositif de commande (80);
**caractérisée en ce que** l'unité d'entraînement (100) comprend en outre un convertisseur de couple (3) auquel un couple délivré par le moteur (2) est entré et **en ce que** le dispositif de commande (80) est configuré pour exécuter une première commande (S3) consistant à commander le couple délivré par le moteur (2) sur la base de la quantité d'opération de freinage de telle sorte que, même pendant l'arrêt du véhicule, le moteur (2) peut être maintenu en rotation.

2. Unité d'entraînement (100) selon la revendication 1, comprenant en outre:
un capteur d'accélérateur (82) détectant un degré d'ouverture de l'accélérateur, dans lequel le contrôleur (80) exécute la première commande (S3) lorsque le degré d'ouverture de l'accélérateur est de 0%.

3. Unité d'entraînement (100) selon la revendication 2, dans laquelle le dispositif de commande (80) exécute une seconde commande lorsque le degré d'ouverture de l'accélérateur est supérieur à 0%, la seconde commande étant exécutée pour arrêter la première commande et commander le couple délivré par le moteur (2) sur la base du degré d'ouverture de l'accélérateur.

4. Unité d'entraînement (100) selon la revendication 2 ou 3, comprenant en outre:
un capteur de vitesse de véhicule (83) détectant une vitesse de véhicule, dans lequel
le dispositif de commande (80) exécute une troisième commande lorsque le degré d'ouverture de l'accélérateur est de 0% et que simultanément la vitesse du véhicule est supérieure à un premier seuil, la troisième commande étant exécutée pour soit commander le couple délivré par le moteur (2), soit exécuter une commande de régénération de telle sorte que la vitesse du véhicule devienne inférieure ou égale au premier seuil.

5. Unité d'entraînement (100) selon l'une quelconque des revendications 1 à 3, comprenant en outre:
un capteur de vitesse du véhicule (83) détectant une vitesse du véhicule, dans lequel
le dispositif de commande (80) exécute la première commande (S3) lorsque la vitesse du véhicule est inférieure ou égale à un premier seuil.

6. Unité d'entraînement (100) selon l'une quelconque des revendications 1 à 5, dans laquelle le dispositif de commande (80) commande le couple délivré par le moteur (2) de telle sorte que le couple augmente avec la réduction de la quantité d'opération de freinage en exécutant la première commande.

7. Unité d'entraînement (100) selon l'une quelconque des revendications 1 à 6, dans laquelle le contrôleur (80) rend nul le couple délivré par le moteur (2) lorsque la quantité d'opération de freinage est supérieure ou égale à un deuxième seuil dans l'exécution de la première commande.
